# EUROPEAN PATENT APPLICATION

(11) **EP 3 104 282 A1**
(43) Date of publication of application: **14.12.2016**
(21) Application number: 16167134.2
(22) Date of filing: 26.04.2016
(51) Int. Cl.: G06F 17/30

(54) **SEARCH METHOD AND SEARCH APPARATUS**

(30) Priority: 10.06.2015 CN 201510316910
(71) Applicant: Xiaomi Inc., Beijing 100085 (CN)
(72) Inventor: LU, Xiaochuang, 100085 Haidian District (CN); CHU, Yueyue, 100085 Haidian District (CN); LIN, Tao, 100085 Haidian District (CN)
(74) Representative: Robson, Aidan John

(57) **Abstract**

The present disclosure relates to a search method and a search apparatus, belonging to the field of computer technologies. The method includes: displaying (101) a search page in which at least one characteristic image each corresponding to a search process is provided, each characteristic image being used to represent a characteristic of search results of a corresponding search process; upon receiving a selection instruction corresponding to a first characteristic image, performing (102) a first search process corresponding to the first characteristic image, so as to obtain search results corresponding to the first search process; and displaying (103) the search results corresponding to the first search process. The present disclosure may improve search efficiency

## Description

### TECHNICAL FIELD

The present disclosure relates to the field of computer technologies, and more particularly, to a search method and a search apparatus.

### BACKGROUND

With the development of mobile terminal technology, mobile terminals have more and more widespread uses, and have become one of the most important tools for people's daily work and life. In the process of using a mobile terminal, people often perform a search operation on the mobile terminal. For example, people may search for news about an event, or search for pictures of a certain type.

When a user performs a search, the user may enter into a search bar keywords to be searched, such as "landscape picture", and then click the option button "Search". Then, the terminal will search for information related to the keywords and then display the search results. For example, the user enters "landscape picture", and clicks the option button "Search", then the terminal can display the searched landscape pictures.

### SUMMARY

In order to overcome problems existing in the related art, the present disclosure provides a search method and a search apparatus, the technical solutions of which are as follows.

According to a first aspect of embodiments of the disclosure, a search method is provided. The method includes:
displaying a search page in which at least one characteristic image each corresponding to a search process is provided, each characteristic image being used to represent a characteristic of search results of a corresponding search process;
upon receiving a selection instruction corresponding to a first characteristic image, performing a first search process corresponding to the first characteristic image, so as to obtain search results corresponding to the first search process; and
displaying the search results corresponding to the first search process.

Optionally, the displaying a search page in which at least one characteristic image each corresponding to a search process is provided includes:
acquiring characteristic images corresponding to a preset number of search processes which have been performed for most number of times within a preset historic time duration; and
displaying a search page in which the acquired characteristic images corresponding to the preset number of search processes are provided.

Optionally, the acquiring characteristic images corresponding to a preset number of search processes which have been performed for most number of times within a preset historic time duration includes:
acquiring characteristic images corresponding to a preset number of search processes which have been performed by a local login account for most number of times within a preset historic time duration.

Optionally, the method further includes:
receiving a search-process adding instruction, and displaying a search-process adding page which displays at least one characteristic image each corresponding to a search process; and
receiving a selection instruction corresponding to a second characteristic image in the search-process adding page, and adding the second characteristic image to the search page.

Optionally, a display effect of the characteristic image is set as a dynamic display.

According to a second aspect of embodiments of the disclosure, a search apparatus is provide. The apparatus includes:
a first display module, configured to display a search page in which at least one characteristic image each corresponding to a search process is provided, each characteristic image being used to represent a characteristic of search results of a corresponding search process;
a performing module, configured to, upon receiving a selection instruction corresponding to a first characteristic image, perform a first search process corresponding to the first characteristic image, so as to obtain search results corresponding to the first search process; and
a second display module, configured to display the search results corresponding to the first search process.

Optionally, the apparatus further includes:
an acquiring module, configured to acquire characteristic images corresponding to a preset number of search processes which have been performed for most number of times within a preset historic time duration; and
the first display module is configured to display a search page in which the acquired characteristic images corresponding to the preset number of search processes are provided.

Optionally, the acquiring module is configured to:
acquire characteristic images corresponding to a preset number of search processes which have been performed by a local login account for most number of times within a preset historic time duration.

Optionally, the apparatus further includes:
a third display module, configured to receive a search-process adding instruction, and display a search-process adding page which displays at least one characteristic image each corresponding to a search process; and
an adding module, configured to receive a selection instruction corresponding to a second characteristic image in the search-process adding page, and add the second characteristic image to the search page.

Optionally, a display effect of the characteristic image is set as a dynamic display.

According to a third aspect of embodiments of the disclosure, a search apparatus is provide. The apparatus includes:
a processor; and
a memory for storing instructions executable by the processor;
wherein the processor is configured to:
display a search page in which at least one characteristic image each corresponding to a search process is provided, each characteristic image being used to represent a characteristic of search results of a corresponding search process;
upon receiving a selection instruction corresponding to a first characteristic image, perform a first search process corresponding to the first characteristic image, so as to obtain search results corresponding to the first search process; and
display the search results corresponding to the first search process.

According to a fourth aspect of embodiments of the present disclosure, there is provided a computer program which, when being executed on a processor of an apparatus, performs any one of the above methods.

The technical solutions provided in the embodiments of the present disclosure may achieve the following beneficial effects.

In the present embodiment of the disclosure, a search page, in which at least one characteristic image each corresponding to a search process is provided, is displayed, each characteristic image being used to represent a characteristic of search results of a corresponding search process; upon receiving a selection instruction corresponding to a first characteristic image, a first search process corresponding to the first characteristic image is performed, so as to obtain search results corresponding to the first search process; the search results corresponding to the first search process are displayed. As such, the user may perform search by simply selecting a characteristic image in the search page without manually entering keywords to be searched, thereby to improve search efficiency.

It is to be understood that both the foregoing general description and the following detailed description are exemplary and explanatory only and are not restrictive of the invention, as claimed.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure. In the drawings:
FIG 1 is a flowchart illustrating a search method according to an exemplary embodiment;
FIG. 2 is a diagram illustrating an interface display according to an exemplary embodiment;
FIG. 3 is a diagram illustrating an interface display according to an exemplary embodiment;
FIG. 4 is a diagram illustrating a search apparatus according to an exemplary embodiment;
FIG 5 is a diagram illustrating a search apparatus according to an exemplary embodiment;
FIG. 6 is a diagram illustrating a search apparatus according to an exemplary embodiment; and
FIG 7 is a structural diagram illustrating a terminal according to an exemplary embodiment.

Specific embodiments in this disclosure have been shown by way of example in the foregoing drawings and are hereinafter described in detail. The drawings and written description are not intended to limit the scope of the inventive concepts in any manner. Rather, they are provided to illustrate the inventive concepts to a person skilled in the art by referring to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

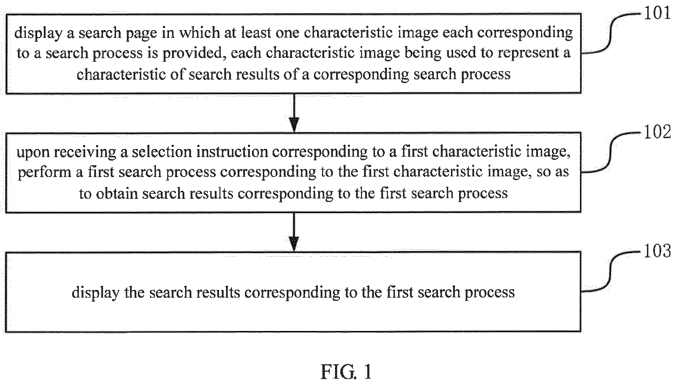

According to an exemplary embodiment of the present disclosure, there is provided a search method. As shown in FIG 1, the process flow of the method may include the following steps.

In step 101, a search page, in which at least one characteristic image each corresponding to a search process is provided, is displayed, each characteristic image being used to represent a characteristic of search results of a corresponding search process.

In step 102, upon receiving a selection instruction corresponding to a first characteristic image, a first search process corresponding to the first characteristic image is performed, so as to obtain search results corresponding to the first search process.

In step 103, the search results corresponding to the first search process are displayed.

In the present embodiment of the disclosure, a search page, in which at least one characteristic image each corresponding to a search process is provided, is displayed, each characteristic image being used to represent a characteristic of search results of a corresponding search process; upon receiving a selection instruction corresponding to a first characteristic image, a first search process corresponding to the first characteristic image is performed, so as to obtain search results corresponding to the first search process; the search results corresponding to the first search process are displayed. As such, the user may perform search by simply selecting a characteristic image in the search page without manually entering keywords to be searched, thereby to improve search efficiency.

According to another exemplary embodiment of the present disclosure, there is provided a search method. The method may be applied in a terminal which has a search function. The terminal may be a mobile terminal such as a mobile phone or a tablet computer. An application which has a search function may be installed on the terminal. The terminal may include an input unit, which may be a button, a touch screen, or a mouse. By means of the input unit, the user may select, on the terminal, a first characteristic image corresponding to a first search process that is desired to be performed. Then the terminal will detect a selection instruction corresponding to the first characteristic image. The terminal may include a processor. Based on the detected selection instruction, the processor may perform the first search process, so as to obtain search results corresponding to the first search process. The terminal may include a display unit, which may be a liquid crystal display. The display unit may display the search results corresponding to the first search process. Besides, the terminal may further include a memory, a sensor, an audio circuit, a power supply, and other components.

Hereinafter, referring to the implementations, the process flow shown in FIG. 1 will be described in detail as follows.

In step 101, a search page, in which at least one characteristic image each corresponding to a search process is provided, is displayed, each characteristic image being used to represent a characteristic of search results of a corresponding search process.

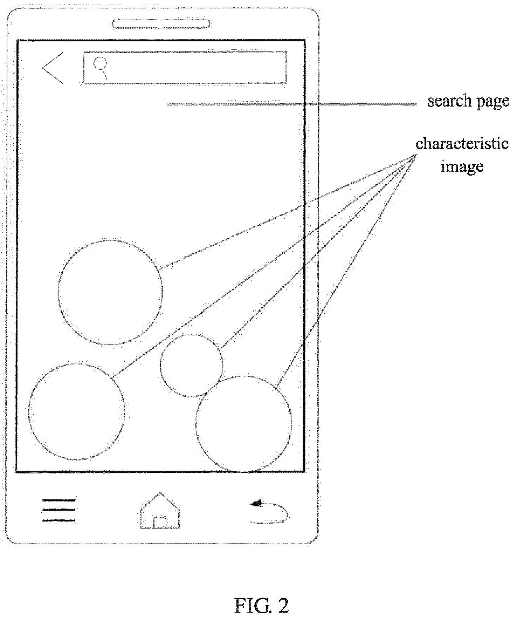

In practice, a user may install on the terminal an application which has a search function. The user may click an icon corresponding to the application on the terminal, then the terminal will activate the application. In the application, the user may click an option corresponding to the search page, then the terminal will receive a click instruction corresponding to the option, and display the search page. At least one characteristic image each corresponding to a search process may be provided in the search page, as shown in FIG. 2, each characteristic image may be used to represent a characteristic of search results of a corresponding search process. For example, the application which has a search function is an application for downloading mobile phone themes. The search process may be searching for blue themes, searching for purple themes, and so on; corresponding characteristic images are respectively a blue balloon and a purple balloon, which may be displayed in the search page. Shapes and sizes of the characteristic images in the search page may be the same or different. For example, the characteristic images may be a plurality of balloons with the same shape and size, or be a plurality of balloons with different shapes and sizes. In addition, a search bar may be provided in the search page, and the user may enter in the search bar keywords to be searched, and then click an option button "Search" to perform searching.

Optionally, characteristic images to be displayed in the search page may be determined based on a total search number of times. The corresponding procedure is as follows: acquiring characteristic images corresponding to a preset number of search processes which have been performed for most number of times within a preset historic time duration; and displaying a search page in which the acquired characteristic images corresponding to the preset number of search processes are provided.

In practice, characteristic images corresponding to a preset number of search processes which have been performed for most number of times within a preset historic time duration are determined based on search records within the preset historic time duration of all users that have the application installed. The user may perform search on the terminal. Then the terminal will perform a corresponding search process, and send to a back-end server of the application a search request corresponding to the search process. After receiving the search request, the back-end server may send corresponding data to the terminal according to the search request, and store information (e.g., identifier of the search process, time cost for performing the search process, etc.) about the search process. The specific procedure for performing search process will be described hereinafter in detail.

The back-end server may record search processes within the preset historic time duration of all users that have the application installed, so as to obtain search records within the preset historic time duration of all users that have the application installed, and based on the search records, statistically calculate total search number of times corresponding to each search process within the preset historic time duration, thereby to determine a preset number of search processes which have been performed for most number of times. For example, the preset number is 3. Based on the search records, the back-end server determines that within the past 30 days, total search number of times of search processes of searching for blue themes is 2250, total search number of times of search processes of searching for purple themes is 3520, total search number of times of search processes of searching for red themes is 1864, and total search number of times of search processes of searching for green themes is 2179. Then it can be determined that three search processes which have been performed for most number of times are searching for purple themes, searching for blue themes and searching for green themes.

After the preset number of search processes which have been performed for most number of times within a preset historic time duration are determined, the back-end server may send identifiers of the determined search processes to the terminal in the form of a push message; or, after receiving a request for acquiring search processes from the terminal, the back-end server may send identifiers of the determined search processes to the terminal. After receiving identifiers of the search processes from the back-end server, the terminal may determine search processes corresponding to these identifiers of the search processes, then may acquire characteristic images corresponding to the determined search processes, and thereby provide in the search page the characteristic images corresponding to the acquired preset number of search processes. When the terminal displays the search page, the characteristic images may be displayed at preset positions of the search page.

Optionally, characteristic images to be displayed in the search page may be determined based on search records of a local login account within a preset historic time duration. The corresponding procedure is as follows: acquiring characteristic images corresponding to a preset number of search processes which have been performed by a local login account for most number of times within a preset historic time duration.

In practice, characteristic images corresponding to a preset number of search processes which have been performed for most number of times within a preset historic time duration are determined based on search records of a local login account within the preset historic time duration. The user may perform search on the terminal. Then the terminal will perform a corresponding search process, and store information (e.g., identifier of the search process, time cost for performing the search process, etc.) about the search process, so as to obtain search records of the local login account.

Based on the search records of the local login account, the terminal may statistically calculate total search number of times corresponding to each search process performed by the local login account within the preset historic time duration, thereby to determine a preset number of search processes which have been performed for most number of times. For example, the preset number is 3. Based on the search records, the terminal determines for the local login account that within the past 30 days, total search number of times of search processes of searching for blue themes is 250, total search number of times of search processes of searching for purple themes is 260, total search number of times of search processes of searching for red themes is 164, and total search number of times of search processes of searching for green themes is 179. Then it can be determined that three search processes which have been performed for most number of times are searching for purple themes, searching for blue themes and searching for green themes.

After the preset number of search processes which have been performed by the local login account for most number of times within a preset historic time duration are determined, the terminal may determine search processes corresponding to the identifiers of the search processes, then may acquire characteristic images corresponding to the determined search processes, and thereby provide in the search page the characteristic images corresponding to the acquired preset number of search processes. When the terminal displays the search page, the characteristic images may be displayed at preset positions of the search page.

Optionally, a display effect of the characteristic image may be set as a dynamic display.

In practice, the terminal may display a search page in which at least one characteristic image each corresponding to a search process is provided, and a display effect of the characteristic image corresponding to a search process in the search page may be set as a dynamic display. The dynamic display may have various manners. For example, the display effect of the characteristic image may be set as moving from left to right, moving up and down, or moving along a movement locus which is a preset curve.

In step 102, upon receiving a selection instruction corresponding to a first characteristic image, a first search process corresponding to the first characteristic image is performed, so as to obtain search results corresponding to the first search process.

In practice, a plurality of search processes may be preset in the terminal, characteristic images may be set corresponding to respective search processes, and a corresponding relationship may be established between the search processes and the characteristic images. When a user wants to perform a certain search, the user may select a corresponding characteristic image (i.e., the first characteristic image) in the search page, then the terminal will receive a selection instruction corresponding to the first characteristic image, and then determine a first search process corresponding to the first characteristic image according to the pre-stored corresponding relationship between the search processes and the characteristic images, and perform the first search process.

The terminal may also store identifiers of respective search processes. Upon receiving a selection instruction corresponding to the first characteristic image, the terminal may determine an identifier of the first search process corresponding to the first characteristic image, and then send to a back-end server of the application a search request corresponding to the first search process, wherein the search request may carry the identifier of the first search process. The back-end server may pre-store search results corresponding to identifiers of the respective search processes. After receiving the search request, the back-end server may analyze the search request, acquire the identifier of the first search process, and then query in a local database the search results corresponding to the identifier of the first search process, thereby to send the queried search results to the terminal. For example, the back-end server may store 100 blue themes corresponding to an identifier of search process of searching for blue themes, store 40 red themes corresponding to an identifier of search process of searching for red themes, and store 80 green themes corresponding to an identifier of search process of searching for green themes. Upon receiving a search request of searching for blue themes, the back-end server may send data of 100 blue themes to the terminal.

In step 103, the search results corresponding to the first search process are displayed.

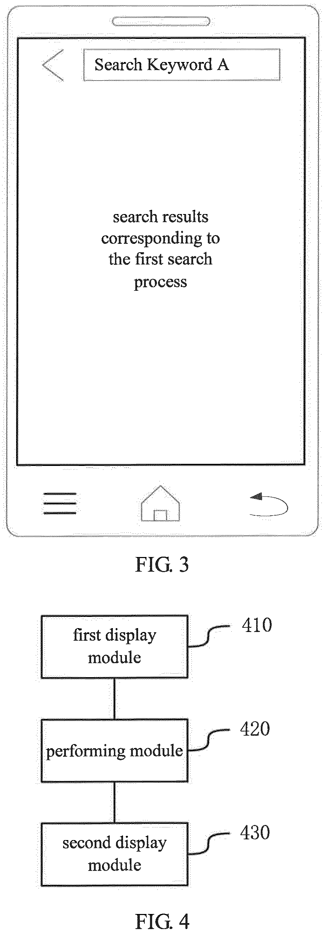

In practice, after obtaining the search results corresponding to the first search process, the terminal may display a search result page, and display the search results corresponding to the first search process in the search result page. Further, the terminal may also store search keywords corresponding to respective characteristic images. For example, the search process is searching for blue themes, a corresponding characteristic image is a blue balloon, so the search keywords corresponding to the blue balloon are "blue themes". In the search result page of the terminal, except that the search results corresponding to the first search process may be displayed, the search keywords (e.g., search keyword A) corresponding to the first characteristic image may also be displayed to prompt the user, as shown in FIG. 3.

Optionally, the user may add a characteristic image to the search page, and a corresponding procedure may be as follows: receiving a search-process adding instruction, and displaying a search-process adding page which displays at least one characteristic image each corresponding to a search process; and receiving a selection instruction corresponding to a second characteristic image in the search-process adding page, and adding the second characteristic image to the search page.

In practice, a search-process adding option may be provided in the search page, the user may click the search-process adding option, then the terminal will receive a search-process adding instruction, display a search-process adding page which displays at least one characteristic image each corresponding to a search process. The user may select a characteristic image (i.e., the second characteristic image) corresponding to the search process that is desired to be added, then the terminal will receive a selection instruction corresponding to the second characteristic image in the search-process adding page, and add the second characteristic image to the search page.

In the present embodiment of the disclosure, a search page, in which at least one characteristic image each corresponding to a search process is provided, is displayed, each characteristic image being used to represent a characteristic of search results of a corresponding search process; upon receiving a selection instruction corresponding to a first characteristic image, a first search process corresponding to the first characteristic image is performed, so as to obtain search results corresponding to the first search process; the search results corresponding to the first search process are displayed. As such, the user may perform search by simply selecting a characteristic image in the search page without manually entering keywords to be searched, thereby to improve search efficiency.

According to still another exemplary embodiment of the present disclosure, there is provided a search apparatus. As shown in FIG. 4, the apparatus includes: a first display module 410, a performing module 420 and a second display module 430.

The first display module 410 is configured to display a search page in which at least one characteristic image each corresponding to a search process is provided, each characteristic image being used to represent a characteristic of search results of a corresponding search process;
The performing module 420 is configured to, upon receiving a selection instruction corresponding to a first characteristic image, perform a first search process corresponding to the first characteristic image, so as to obtain search results corresponding to the first search process; and
The second display module 430 is configured to display the search results corresponding to the first search process.

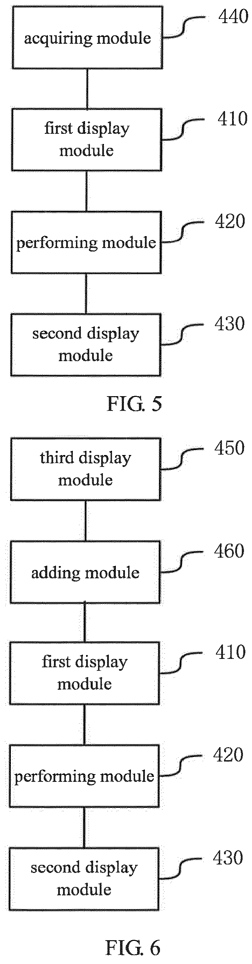

Optionally, as shown in FIG. 5, the apparatus further includes:
an acquiring module 440, configured to acquire characteristic images corresponding to a preset number of search processes which have been performed for most number of times within a preset historic time duration; and
the first display module 410 is configured to display a search page in which the acquired characteristic images corresponding to the preset number of search processes are provided.

Optionally, the acquiring module 440 is configured to:
acquire characteristic images corresponding to a preset number of search processes which have been performed by a local login account for most number of times within a preset historic time duration.

Optionally, as shown in FIG 6, the apparatus further includes:
a third display module 450, configured to receive a search-process adding instruction, and display a search-process adding page which displays at least one characteristic image each corresponding to a search process; and
an adding module 460, configured to receive a selection instruction corresponding to a second characteristic image in the search-process adding page, and add the second characteristic image to the search page.

Optionally, a display effect of the characteristic image is set as a dynamic display.

With respect to the apparatuses in the above embodiments, the specific implementations of operations executed by various modules thereof have been described in detail in the embodiments illustrating the methods, which are not described herein any further.

In the present embodiment of the disclosure, a search page, in which at least one characteristic image each corresponding to a search process is provided, is displayed, each characteristic image being used to represent a characteristic of search results of a corresponding search process; upon receiving a selection instruction corresponding to a first characteristic image, a first search process corresponding to the first characteristic image is performed, so as to obtain search results corresponding to the first search process; the search results corresponding to the first search process are displayed. As such, the user may perform search by simply selecting a characteristic image in the search page without manually entering keywords to be searched, thereby to improve search efficiency.

It should be noted that, during performing search by the search apparatuses according to the above embodiments, the apparatuses are described by only using division of the above functional modules as examples. In practice, the functions may be assigned to different functional modules for implementation as required. To be specific, the internal structures of the devices are divided into different functional modules to implement all or part of the above-described functions. In addition, the search apparatuses according to the above embodiments are based on the same inventive concept as the search methods according to the embodiments of the present disclosure. The specific implementation is elaborated in the method embodiments, which is not described herein any further.

According to yet still another exemplary embodiment of the present disclosure, there is provided a structural diagram of a terminal. The terminal may be a mobile phone and the like.

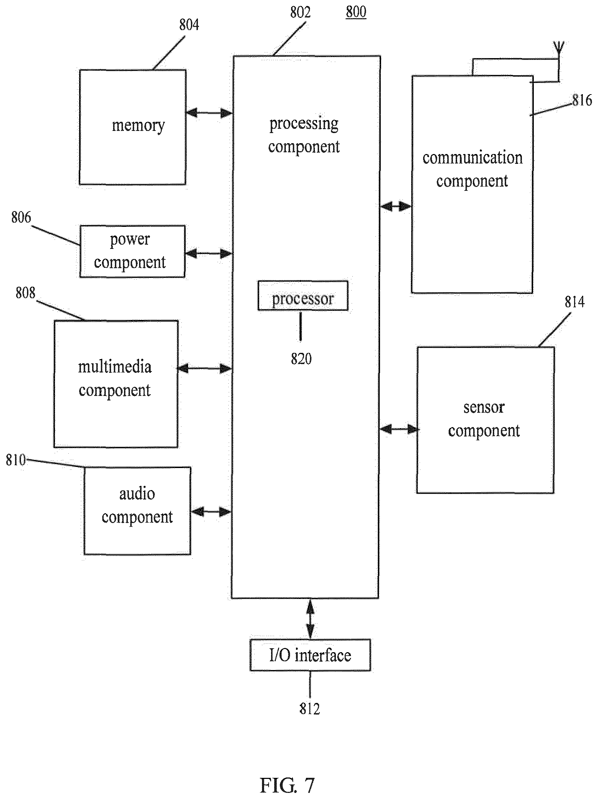

Referring to FIG. 7, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or a part of the steps in the above-described methods. In addition, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the terminal 800. Examples of such data include instructions for any application or method operated on the terminal 800, contact data, phonebook data, messages, pictures, videos, and the like. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power supplies, and other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive external multimedia data while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, or a voice recognition mode. The received audio signal may be further stored in the memory 804 or transmitted via the communication component 816.

The I/O interface 812 provides an interface between the processing component 802 and a peripheral interface module, such as a keyboard, a click wheel, a button, or the like. The buttons may include, but are not limited to, a home button, a volume button, a starting button, and a locking button.

The sensor component 814 includes one or more sensors to provide status assessments of various aspects of the terminal 800. For example, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communications, wired or wirelessly, between the terminal 800 and other devices. The terminal 800 may access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A search method, comprising:
displaying (101) a search page in which at least one characteristic image each corresponding to a search process is provided, each characteristic image being used to represent a characteristic of search results of a corresponding search process;
upon receiving a selection instruction corresponding to a first characteristic image, performing (102) a first search process corresponding to the first characteristic image, so as to obtain search results corresponding to the first search process; and
displaying (103) the search results corresponding to the first search process.

2. The method according to claim 1, **characterized in that** the displaying (101) a search page in which at least one characteristic image each corresponding to a search process is provided comprises:
acquiring characteristic images corresponding to a preset number of search processes which have been performed for most number of times within a preset historic time duration; and
displaying a search page in which the acquired characteristic images corresponding to the preset number of search processes are provided.

3. The method according to claim 2, **characterized in that** the acquiring characteristic images corresponding to a preset number of search processes which have been performed for most number of times within a preset historic time duration comprises:
acquiring characteristic images corresponding to a preset number of search processes which have been performed by a local login account for most number of times within a preset historic time duration.

4. The method according to claim 1, **characterized in that** the method further comprises:
receiving a search-process adding instruction, and displaying a search-process adding page which displays at least one characteristic image each corresponding to a search process; and
receiving a selection instruction corresponding to a second characteristic image in the search-process adding page, and adding the second characteristic image to the search page.

5. The method according to claim 1, **characterized in that** a display effect of the characteristic image is set as a dynamic display.

6. A search apparatus, comprising:
a first display module (410), configured to display a search page in which at least one characteristic image each corresponding to a search process is provided, each characteristic image being used to represent a characteristic of search results of a corresponding search process;
a performing module (420), configured to, upon receiving a selection instruction corresponding to a first characteristic image, perform a first search process corresponding to the first characteristic image, so as to obtain search results corresponding to the first search process; and
a second display module (430), configured to display the search results corresponding to the first search process.

7. The apparatus according to claim 6, **characterized in that** the apparatus further comprises:
an acquiring module (440), configured to acquire characteristic images corresponding to a preset number of search processes which have been performed for most number of times within a preset historic time duration; and
the first display module (410) is configured to display a search page in which the acquired characteristic images corresponding to the preset number of search processes are provided.

8. The apparatus according to claim 7, **characterized in that** the acquiring module (440) is configured to:
acquire characteristic images corresponding to a preset number of search processes which have been performed by a local login account for most number of times within a preset historic time duration.

9. The apparatus according to claim 6, **characterized in that** the apparatus further comprises:
a third display module (450), configured to receive a search-process adding instruction, and display a search-process adding page which displays at least one characteristic image each corresponding to a search process; and
an adding module (460), configured to receive a selection instruction corresponding to a second characteristic image in the search-process adding page, and add the second characteristic image to the search page.

10. The apparatus according to claim 6, **characterized in that** a display effect of the characteristic image is set as a dynamic display.

11. A search apparatus, comprising:
a processor (820); and
a memory (804) for storing instructions executable by the processor (820);
wherein the processor (820) is configured to:
display a search page in which at least one characteristic image each corresponding to a search process is provided, each characteristic image being used to represent a characteristic of search results of a corresponding search process;
upon receiving a selection instruction corresponding to a first characteristic image, perform a first search process corresponding to the first characteristic image, so as to obtain search results corresponding to the first search process; and
display the search results corresponding to the first search process.

12. A computer program which, when being executed on a processor of an apparatus, performs a method according to any one of claims 1 to 5.
